# EUROPÄISCHE PATENTANMELDUNG

(11) **EP 1 159 902 A2**
(43) Veröffentlichungstag der Anmeldung: **05.12.2001**
(21) Anmeldenummer: 01112203.3
(22) Anmeldetag: 18.05.2001
(51) Int. Cl.: A47G 9/10, A47C 16/00, B60N 2/48

(54) **Autokissen**

(30) Priorität: 02.06.2000 DE 20009922 U
(71) Anmelder: Wolltex GmbH, 63811 Stockstadt/Main (DE)
(72) Erfinder: Nüssler, Stefan, 63811 Stockstadt/Main (DE)
(74) Vertreter: Pöhner, Wilfried Anton, Dr.

(57) **Zusammenfassung**

Die Erfindung betrifft ein Autokissen mit einer Kissenhülle mit Öffnung, die vorzugsweise entlang einer Kante der Kissenhülle ausgebildet und mit einem Verschluß versehen ist, und einer Kissenfüllung, welche durch die Öffnung entnehmbar ist, wobei die Kissenfüllung als Decke ausgebildet ist, die Decke zu einem Paket von der Größe der Kissenhülle zusammengefaltet ist und in der Kissenhülle untergebracht ist.

## Beschreibung

Die Erfindung bezieht sich auf ein Autokissen mit einer Kissenhülle mit Öffnung, die vorzugsweise entlang einer Kante der Kissenhülle ausgebildet und mit einem Verschluß versehen ist, und einer Kissenfüllung, welche durch die Öffnung entnehmbar ist.

Autokissen werden in der Regel dazu genutzt, den Komfort für Fahrer und Mitfahrer zu erhöhen. Mitunter enthalten die Kissen auch Autozubehör, mit dem beim Autofahren anfallende Aufgaben durchgeführt werden können.

Zu bekannten Kissen dieser Art gehören Kopfkissen, Nackenkissen, Rückenkissen oder Verbandskissen, die auf einen engen Anwendungsbereich beschränkt sind, der bereits durch die Namensgebung definiert ist. Die zuerst genannten werden meist durch Mitfahrer benutzt, die während der Fahrt eine Schlaf- oder Ruhepause einlegen, das zuletzt genannte dient weniger dem Komfort, als der ersten Hilfe bei Verletzungen.

Zu dem Zweck, sich mit dem Kissen während der Autoreise etwa zu wärmen, sind diese Kissen ungeeignet. Aber gerade hierzu besteht in besonderen Situationen Bedarf. Beispielsweise dann, wenn die Autoreise während der kalten Jahreszeit unternommen wird und der Reisende in einen Stau gerät. Für Fahrer und Mitreisende bringt eine solche Situation in vielen Fällen eine empfindliche körperliche Beeinträchtigung durch die Kälte mit sich. Insbesondere nach den jeweils ersten Schneefällen des Jahres treten Staus dieser Art häufig auf. Unglücklicherweise sind diese Staus meist auch sehr hartnäckig und von langer Dauer, Staus mit einer Dauer von mehreren Stunden sind dabei keine Seltenheit.

Die wenigsten Autofahrer sind auf eine solche Situation vorbereitet und führen in aller Regel keine wärmenden Decken mit sich im Auto. Da die Mitnahme einer Decke mit einem gewissen Aufwand verbunden ist, unterbleibt sie meistens aus Gründen der Bequemlichkeit. Autofahrer, die bei tiefen Außentemperaturen in einem lang anhaltenden Stau liegen bleiben, können sich in Ermangelung von wärmenden Decken dann nur mit "Ersatzdecken", wie Schonbezügen oder auch Zeitungen behelfen.

Vor diesem Hintergrund hat sich die Erfindung die Aufgabe gestellt, diesen Mangel zu beheben, den damit verbundenen Nachteilen abzuhelfen und dem Bedarf nach einer im Auto verfügbaren wärmenden Decke zu entsprechen und den Hinderungsgründen gegen die Mitnahme einer Decke im Auto entgegenzuwirken.

Ausgehend von einem Autokissen mit einer Kissenhülle mit Öffnung, die vorzugsweise entlang einer Kante der Kissenhülle ausgebildet und mit einem Verschluß versehen ist, und einer Kissenfüllung, welche durch die Öffnung entnehmbar ist, wird diese Aufgabe dadurch gelöst, daß die Kissenfüllung als Decke ausgebildet ist, die Decke zu einem Paket von der Größe der Kissenhülle zusammengefaltet ist und die Kissenhülle als Aufbewahrungsort für die Decke genutzt wird.

Die Abmessungen des erfindungsgemäßen Kissens sind sehr handlich. Aufgrund der Handlichkeit sind die Chancen für eine Mitnahme des Kissens im Auto sehr viel größer, als für die Mitnahme einer Decke, die aus Bequemlichkeitsgründen meistens unterbleibt. Zudem eröffnet ein im Auto mitgeführtes Kissen der vorgeschlagenen Art dem Reisenden etliche Annehmlichkeiten, Vorteile und nutzbringende Anwendungen.

Das Kissen selbst kann wie bekannte Autokissen eingesetzt werden und als Kopfkissen, Nackenkissen oder Rückenkissen verwendet werden. Zudem ist das Kissen aus einem weichen Material ausgebildet, so daß es während der Fahrt von Mitreisenden für eine Schlaf- oder Ruhepause genutzt werden kann. Auch beim Transport von Gegenständen im Auto leistet das vorgeschlagene Kissen gute Dienste. Z.B. beim Transport von empfindlichen Geräten, wie beispielsweise PC; Bildschirm oder Fernseher, kann das Kissen zur Abpolsterung verwendet werden. Beim Transport von sperrigen Gegenstände im Kofferraum kommt es mitunter auch vor, daß der Kofferraumdeckel nicht geschlossen werden kann, sondern auf den transportierten Gegenständen aufliegt. In diesem Fall kann das Kissen zur Abpolsterung der Kofferaumkante verwendet werden.

Der eigentliche Nutzen des Kissen kommt jedoch bei der Anwendung der in der Kissenhülle untergebrachten Decke zum Tragen. Diese Decke ist gemäß der Erfindung aus einer Schicht oder mehreren Schichten unterschiedlicher Eigenschaften aufgebaut. Bevorzugt wird eine Variante, bei der die Decke oder eine ihrer Schichten mit einer wärmenden oder wärmeisolierenden Eigenschaft ausgestattet ist. Damit haben Fahrer oder Mitreisende jederzeit die Möglichkeit, sich gegen Kälte zu schützen. Die Decke kann dabei gleichwohl für Schlafpausen innerhalb oder außerhalb des Autos genutzt werden oder dazu, während der Fahrt eingeschlafene Kinder zuzudecken.

Insbesondere verlieren damit Reisen während der kalten Jahreszeit ihre Schrecken, wenn man unvorhergesehen in einen längeren Stau gerät. Mit einer Decke gemäß der Erfindung an Bord ist es dann nicht mehr notwendig, der Kälte mit Ersatzdecken, wie Schonbezügen oder Zeitungen zu begegnen, da die im Kissen mitgeführte Decke optimalen Schutz gegen die Kälte bietet.

Die Decke mit wärmender Eigenschaft kann einerseits dazu genutzt werden, um unangenehme körperliche Beeinträchtigungen bei Kälte zu verhindern. Die Decke dieser Art kann aber auch für medizinische Einsätze verwendet werden. Wenn bei einem Unfall verletzte Personen unter Schock stehen, ist die Erhaltung der Körpertemperatur dringend geboten. In diesem Fall kann der Einsatz der vorgeschlagenen Decke ggf. lebenserhaltende Wirkung haben.

Bei einer weiteren Variante des Kissens weist die in der Kissenhülle aufbewahrte Decke eine schmutzabweisende Schicht auf. Decken dieser Ausprägung können beispielsweise beim Transport von Tieren oder verschmutzten Gegenständen im Auto wertvolle Dienste leisten. Auf diese Weise lassen sich problemlos zum Beispiel Reifen nach einem Reifenwechsel auch auf den Sitzen innerhalb des Autos transportieren. Schmutz an den Reifen oder der an den Reifen haftende Staub von Bremsbelägen können den Sitzbezügen nichts anhaben, wenn man die Sitze zuvor mit der vorgeschlagenen Decke abdeckt. Eine Decke dieser Art ist auch dann von Vorteil, wenn beispielsweise Tierhaare von den Sitzbezügen ferngehalten werden sollen. Bei diesem Anwendungsfall können auch die Vierbeiner auf den Sitzen mitreisen, wenn die Sitze durch die vorgeschlagene Decke, mit der schmutzabweisenden Seite nach dem Fahrgastraum gerichtet, abgedeckt sind. Die auf der schmutzabweisenden Seite der Decke während der Fahrt angesammelten Tierhaare lassen sich dann in einfacher Weise durch Ausschütteln der Decke entfernen.

Auch für den Fall, daß am Wagen Kontrollen oder Reparaturen durchgeführt werden müssen, kann die gemäß dieser Variante ausgebildete Decke nutzbringend eingesetzt werden. Mit der Decke als Arbeitsunterlage- die schmutzabweisenden Seite zum Boden gerichtet - ist es auch ohne Arbeitskleidung möglich, sitzend, knieend oder gar liegend entsprechende Arbeiten vorzunehmen. Eine solche Arbeit kann beispielsweise ein Reifenwechsel nach einer Reifenpanne sein oder die Kontrolle eines Auspuffs mit verändertem Geräusch.

Die Variante mit einer schmutzabweisenden Schicht der Decke läßt aber auch für angenehme Anwendungsfälle nutzen. Beispielsweise kann diese Decke als Sitz- und Liegedecke bei einem Badeausflug oder einem Picknick dienen.

Auch für eine Schlafpause außerhalb des Autos ist diese Ausführungsform mit Vorteil anzuwenden.

Bei einer anderen Variante des Kissens weist die in der Kissenhülle aufbewahrte Decke eine wasserabweisende Schicht auf. Decken dieser Ausprägung können für ähnliche Anwendungsfälle genutzt werden, wie Decken mit schmutzabweisender Schicht. Sie werden mit Vorteil dann eingesetzt, wenn der transportierte Gegenstand oder die Unterlage der Decke Feuchtigkeit abgeben.

Bei einer vorteilhaften Variante ist die im Kissen untergebrachte Decke selbst oder die an der Oberfläche der Decke liegende Schicht mit einer Entflammung hemmenden Eigenschaft ausgebildet. Bei einer Decke dieser Ausgestaltung ist der Einsatz als Löschdecke gegeben. Einem plötzlich auftretenden Brand am oder im Wagen stehen die meisten Autofahrer hilflos gegenüber, da sie in der Regel keine geeigneten Löschmittel im Fahrzeug mitführen. Die Folgen dieser Nachlässigkeit sind oftmals erhebliche finanzielle, mitunter auch schwerwiegende gesundheitliche Schäden. Schäden dieser Tragweite können mit einer gemäß der Erfindung vermieden werden, da die vorgeschlagene Decke geeignet ist, Fahrzeugbrände wirksam zu bekämpfen.

Für Camper unter den Autofahrern bietet eine weitere Ausgestaltung der im Kissen aufbewahrten Decke eine vorteilhafte Anwendung. Bei dieser Ausgestaltung ist der Rand der Decke mit einem Verschluß, vorzugsweise einem Reißverschluß, versehen, mit Hilfe dessen die Decke in einen Schlafsack wandelbar ist. Von Vorteil für diese Anwendung ist es, wenn die Decke oder einzelne Schichten der Decke gleichzeitig mit einer wärmeisolierenden und einer wasserabweisenden Eigenschaft ausgebildet sind.

Auch die Kissenhülle des erfindungsgemäßen Kissens bietet Autofahrern eine vorteilhafte Anwendung. Die Kissenhülle ist gemäß der Erfindung aus einer Schicht oder mehreren Schichten unterschiedlicher Eigenschaften aufgebaut.

Von Vorteil ist eine Ausführungsform mit einer wärmenden oder wärmeisolierenden Schicht. Sie gibt dem Fahrer oder Mitreisenden jederzeit die Möglichkeit, auch Hände oder Füße gegen Kälte zu schützen. Diese Schutzmöglichkeit ist während der kalten Jahreszeit und insbesondere dann, wenn man unvorhergesehen in einem länger anhaltenden Stau stecken bleibt, von Wichtigkeit.

Eine vorteilhafte Ausbildung der Kissenhülle weist einen Verschluß, vorzugsweise einen Klett- oder Reißverschluß auf, der sicherstellt, daß die Decke in der Kissenhülle ordnungsgemäß aufbewahrt wird.

Beim Zusammenlegen der Decke wird die Decke mit Vorteil in Mäandern gefaltet, wobei die Mäander mit Fortschritt der Faltung stetig kleiner ausgebildet werden. Diese Faltung stellt sicher, daß das Kissen nach Einschieben der Decke in die Kissenhülle eine angenehme, gerundete Form aufweist.

Weitere Einzelheiten, Merkmale und Vorteile der Erfindung lassen sich dem nachfolgenden Teil der Beschreibung entnehmen, Anhand von Zeichnungen wird ein Ausführungsbeispiel näher erläutert.

Es zeigen in schematischer Darstellung:
- **Figur 1**: eine Aufsicht auf das Kissen,
- **Figur 2**: einen Schnitt durch das Kissen in einer Ebene parallel zur Zeichenebene in Figur 1,
- **Figur 3**: den in Figur 2 angedeuteten Schnitt AB durch das Kissen senkrecht zur Zeichenebene der Figur 2.

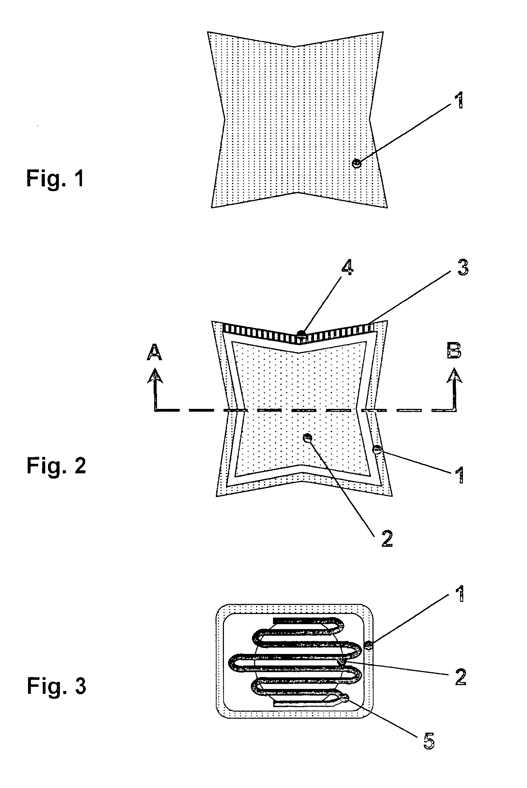

Bei dem Kissen nach Figur 1, 2 und 3 kennzeichnet das Bezugszeichen (1) die Kissenhülle, in Figur 2 ist auch die Kissenfüllung (2) wiedergegeben. Sie ist durch eine Öffnung (3) in der Kissenhülle entnehmbar. Die Öffnung in der Kissenhülle weist einen Verschluß (4) auf, der vorzugsweise durch einen Klett- oder Reißverschluß gebildet wird. Der Verschluß ermöglicht es, die Decke nach Gebrauch in der Kissenhülle ordnungsgemäß aufzubewahren.

In Figur 3 ist der Schnitt AB aus Zeichnung 2 wiedergegeben. Dieser Schnitt durch Kissenhülle (1) und Kissenfüllung(2) läßt das Faltschema der Decke (5) erkennen. Beim Zusammenlegen der Decke wird diese mit Vorteil in Mäandern gefaltet, wobei die Mäander mit Fortschritt der Faltung stetig kleiner ausgebildet werden. Diese Faltung stellt sicher, dass das Kissen nach Einschieben der Decke in die Kissenhülle eine angenehme, gerundete Form aufweist.

## Patentansprüche

1. Autokissen mit einer Kissenhülle mit Öffnung, die vorzugsweise entlang einer Kante der Kissenhülle ausgebildet und mit einem Verschluß versehen ist, und einer Kissenfüllung, welche durch die Öffnung entnehmbar ist, **dadurch gekennzeichnet, daß**
die Kissenfüllung als Decke ausgebildet ist, die Decke zu einem Paket von der Größe der Kissenhülle zusammengefaltet ist und in der Kissenhülle untergebracht ist.

2. Autokissen nach Anspruch 1, **dadurch gekennzeichnet, daß**
die Decke aus einer Schicht oder mehreren Schichten unterschiedlicher Eigenschaften aufgebaut ist.

3. Autokissen nach Anspruch 2, **dadurch gekennzeichnet, daß**
eine Schicht mit einer wärmenden oder wärmeisolierenden Eigenschaft ausgebildet ist.

4. Autokissen nach Anspruch 2, **dadurch gekennzeichnet, daß**
eine Schicht mit einer schmutzabweisenden Eigenschaft ausgebildet ist.

5. Autokissen nach Anspruch 2, **dadurch gekennzeichnet, daß**
eine Schicht mit einer wasserabweisenden Eigenschaft ausgebildet ist.

6. Autokissen nach Anspruch 2, **dadurch gekennzeichnet, daß**
eine Schicht mit einer Entflammung hemmenden Eigenschaft ausgebildet ist.

7. Autokissen nach einem der vorangehenden Ansprüche, **dadurch gekennzeichnet, daß**
die Decke entlang ihres Randes mit einem Verschluß, vorzugsweise einem Reißverschluß, ausgestattet ist.

8. Autokissen nach einem der vorangehenden Ansprüche, **dadurch gekennzeichnet, daß**
die Kissenhülle aus einer Schicht oder mehreren Schichten unterschiedlicher Eigenschaften aufgebaut ist.

9. Autokissen nach Anspruch 8, **dadurch gekennzeichnet, daß**
eine Schicht mit einer wärmenden oder wärmeisolierenden Eigenschaft ausgebildet ist.

10. Autokissen nach einem der vorangehenden Ansprüche, **dadurch gekennzeichnet, daß**
der Verschluß in der Kissenhülle als Reißverschluß oder Klettverschluß ausgebildet ist.

11. Autokissen nach einem der vorangehenden Ansprüche, **dadurch gekennzeichnet, daß**
die Faltung der Decke in Mäandern ausgeführt wird und die Mäander mit Fortschritt der Faltung stetig kleiner ausgebildet sind.
